# EUROPEAN PATENT SPECIFICATION

(11) **EP 2 633 248 B1**
(45) Date of publication and mention of the grant of the patent: **24.02.2016**
(21) Application number: 11776159.3
(22) Date of filing: 26.10.2011
(51) Int. Cl.: F24J 2/52, E04D 13/14

(54) **ROOF ANCHOR FOR FIXING FRAME STRUCTURES TO A ROOF**
DACHANKER ZUR FIXIERUNG VON RAHMENSTRUKTUREN AUF EINEM DACH
ÉLÉMENT D'ANCRAGE DE TOIT POUR FIXER DES STRUCTURES D'OSSATURE À UN TOIT

(30) Priority: 27.10.2010 DK 201070452
(43) Date of publication of application: 04.09.2013
(73) Proprietor: ICOPAL A/S, 2730 Herlev (DK); Jual Holding A/S, 7130 Juelsminde (DK)
(72) Inventor: JEPSEN, Henrik, DK-8960 Randers SØ (DK); EJRUP OLSEN, John, DK-2200 Copenhagen N (DK)
(74) Representative: Zacco Denmark A/S
(86) International application number: PCT/EP2011/068785
(87) International publication number: WO 2012/055927

(56) References cited:
- WO-A1-01/28811
- AU-A1- 2003 231 587
- DE-A1-102008 012 717
- DE-U1- 8 418 908
- DE-U1-202007 005 995
- DE-U1-202009 015 787
- DE-U1-202010 001 933
- US-A1- 2009 188 487

## Description

The present invention relates to a roof anchor and system for fixing frame structures to a roof, the roof anchor comprising of: a base structure configured to be mounted on a roofing surface, the base structure comprising of a base and a substantially circular protrusion with a top part having a substantially planar top surface, the protrusion further having a reduced circumference at its lower end defining a gap encircling the protrusion, the roof anchor further comprising a top fitting comprising a guide.

### Background of the invention

Solar panels have become increasingly popular due to, among others, focus on reduction of emission of CO2 and reductions in production and acquisition costs. Solar panels, both photovoltaic and solar thermal, are mounted as integrated parts of new buildings and also retrofitted to existing building stock.

Installation of photovoltaic solar panels, thermal solar panels or solar collectors require a strong foundation on which the panels can be mounted. Such foundations are often obtained by placing new structures on top of an existing roof. Such structures must not corrupt the water tight nature of the roof and the structure has to be long-lasting and at the same time, easy to construct.

Adjusting non-aligned mountings on a roof may be difficult and time consuming, especially due to requirements regarding waterproof properties. When installing roof structures it is therefore desirable to keep requirements in relation to tolerances and precision to a minimum.

WO 0128811 A1 discloses an anchorage including two members; one fixed to one end of a strap or other element to be secured. The members hook interlock ably together upon pull on the strap. One member, usually the fixed one, may be a stud of mushroom form while the other may be a D-shaped plate with a curved periphery extending out of the plane of the plate to form a U-shaped channel that can hook onto the head of the stud.

DE 10 2008 012 717 A1 discloses a roof mounting device having a base plate arranged at a lower end of a support unit, and a fixing geometry part, such as flange disk, arranged at an upper end of the unit. The unit has upper and lower support segments adjusted relative to each other. The plate is arranged at the lower segment, and the geometry part is arranged at the upper segment. A flange is arranged at an outer circumference of the upper segment. The segments are designed as a thread sleeve and a threaded spindle. A polyamide disk is arranged between the geometry part and the flange.

AU 2003 231 587 A discloses a foot assembly comprising a pair of base elements. Each base element includes a horizontal leg, a vertical leg and a first pivotal attachment point for each vertical leg. The assembly further includes complementary elements associated with the pair of base elements and each complementary element includes a securing member, and an attachment member. Each complementary element being pivotally joined to a respective base element through a connection between one of the first pivotal attachment points and one of the attachment members.

### Summary of the invention

The invention is set forth and characterized in the main claim, while the dependent claims describe other characteristics of the invention.

The present invention seeks to provide an improved device and system for mounting frame structures on a roof top.

This is achieved by a roof anchor to be mounted directly on a roof , top and for fixing frame structures to a roof, said roof anchor comprising; a base structure configured to be mounted directly on a roof top on a roofing surface and a substantially circular protrusion with a top part having a substantially planar top surface, the protrusion further having a reduced circumference at its lower end defining a gap encircling the protrusion, the roof anchor further comprises a top fitting comprising a guide which is constituted by a substantially planar sheet and folds defining a second set of gaps, the planar sheet spans the length and width of the top fitting and defines a top face, wherein the guide constitutes a bracket for receiving equipment or construction elements, the bracket comprising two opposite faces extending perpendicularly from said top face of said sheet, the top fitting further is configured for engagement with said top part of said protrusion and wherein the top fitting is able to rotate in relation to the base structure when the gaps of the guide of the top fitting are in engagement with the top part of the protrusion.

An advantage in this respect is that the base structure can be mounted on e.g. a roof top without particular regard to the angular orientation of the base structure as the base structure is not directional. The angular orientation of the roof anchor is determined by the top fitting. As the top fitting may be rotated after having been connected to the base structure, the angular orientation of the roof anchor can be adjusted after the base structure has been mounted on a roof. Hereby a non directional roof anchor, that may improve the construction process, is achieved.

In one embodiment the top part of the protrusion is able to move or slide in a longitudinal direction in the guide of said top fitting when the guide is in engagement with the top part of the protrusion. An advantage in this respect is that the top fitting is able to move to some extend in the longitudinal and/or transversal direction in addition to the rotational capabilities. Hereby an even more flexible roof anchor is achieved.

Disclosed herein is further a system for fixing solar panels to a roof by the system constituting a frame structure on which solar panels can be mounted, the system comprising; four or more roof anchors as described above, a first set of beams adapted for being mounted on said top fittings of said roof anchors, a second set of beams adapted for being mounted on first set of beams, wherein the base structures of the roof anchors are configured for being mounted without particular regard to their angular orientation and the top fittings are able to rotate in relation to the base structures when the guides of the top fittings are in engagement with the top parts of the protrusions.

The disclosed invention can be used for mounting many different kinds of equipment such as photovoltaic solar panels, thermal solar panels or solar collectors but not limited hereto. It is obvious to the person skilled that the present invention can be used for mounting many different kinds of equipment such as e.g. billboards, cooling panels, terraces, air duct channels or the like.

### Brief description of the drawings

In the following, the invention will be described in greater detail with reference to embodiments shown by the enclosed figures. It should be emphasized that the embodiments shown are used for example purposes only and should not be used to limit the scope of the invention.

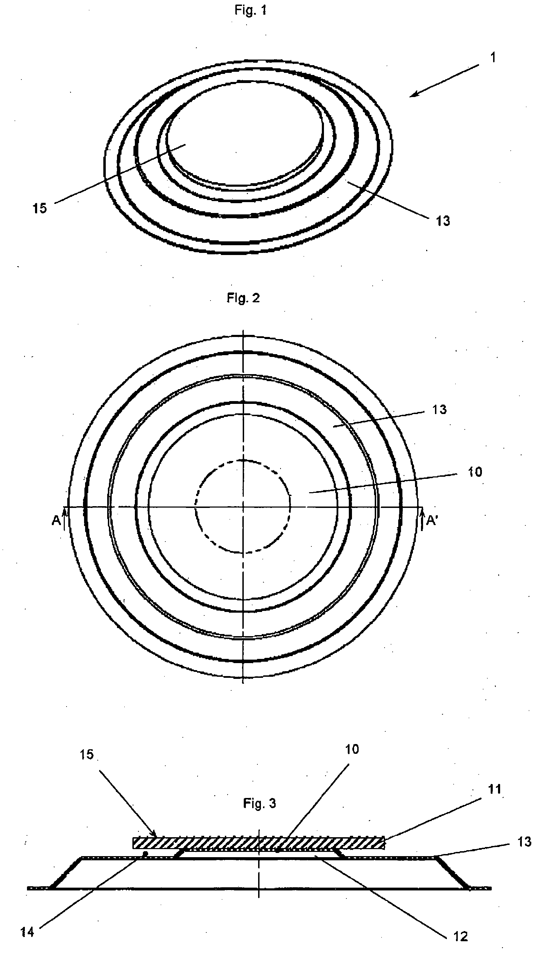

Fig. 1 is a perspective view of a base structure according to an embodiment of the invention.
Fig. 2 is a top view of a base structure.
Fig. 3 is a sectional view of the base structure along the line AA'

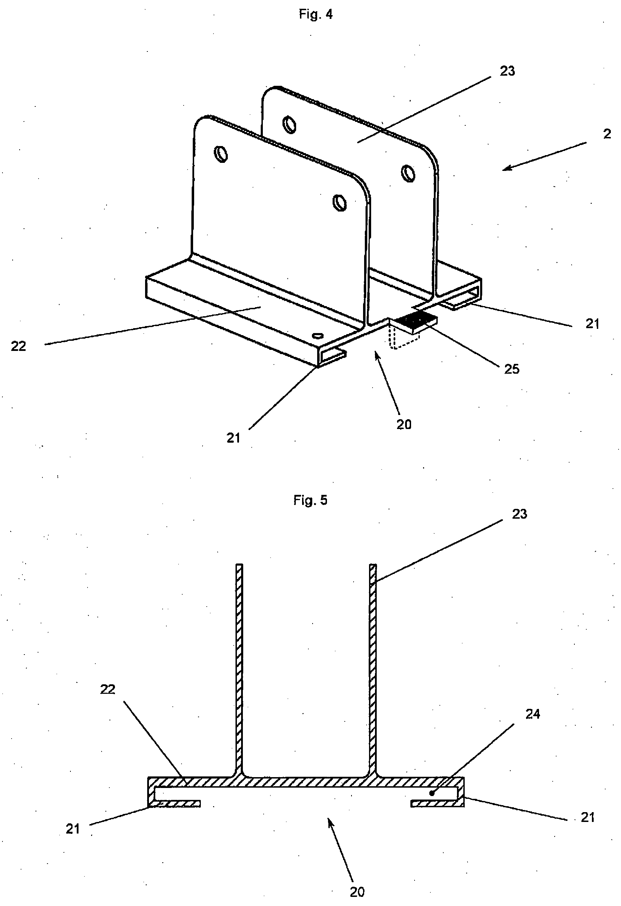

Fig. 4 is a top fitting according to an embodiment of the invention
Fig.5 is a sectional view of the top fitting.

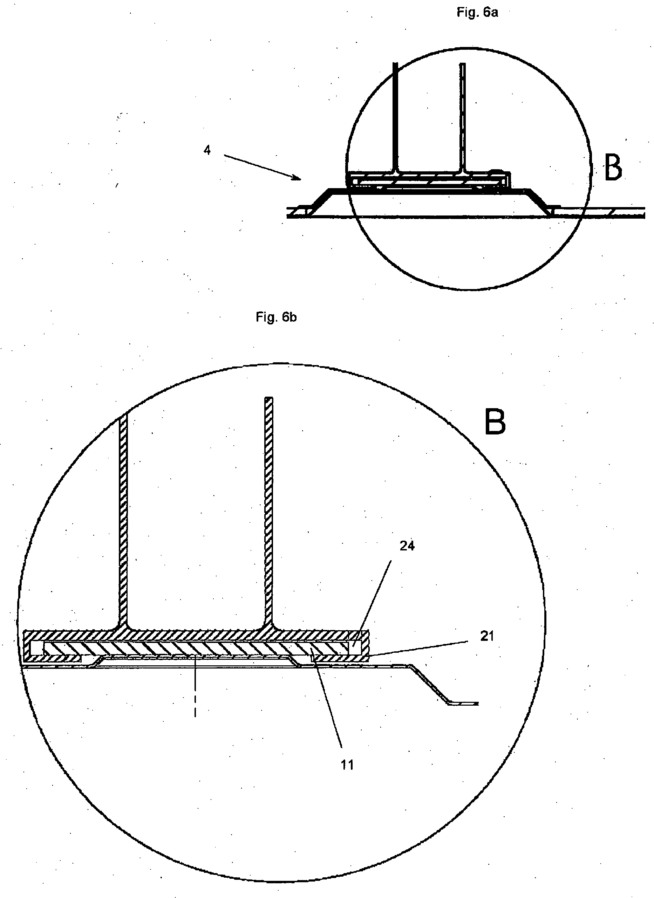

Fig. 6 is a side view of a roof anchor according to an embodiment of the invention, showing top fitting in engagement with the base structure.
Fig. 7 is a schematic drawing illustrating a frame structure for fixing solar panels to a roof.

### Detailed description

With reference to the drawings the invention will be described in the following. A roof anchor according an embodiment of the invention comprises a base structure and a top fitting.

The base structure 1 comprises a base 13 and protrusion 10 extending from the centre of the base 13. The protrusion is substantially circular and has a substantially planar top surface 15. The protrusion 10 has a lower end 12 adjacent the base 13 and a top part 11 opposite the lower end 12. The lower end 12 of the protrusion 10 has a reduced circumference compared to the top part 11. The top part thereby constitutes a projecting rim or flange on the protrusion 10. Hereby a first gap 14 encircling the lower end of protrusion is defined. The base structure may be mounted directly on a roof top.

The top fitting 2 comprises a guide 20 constituted by substantially planar sheet 22 and folds 21 defining a second set of gaps 24. The sheet 22 spans the length and the width of the top fitting 2 and defines a top face. The folds 21 are arranged along two opposite edges of the sheet 22 and may run along the entire length of the sheet 22. The folds 21 are adapted to engage with the protrusion 10 of the base structure 1 by receiving the top part 11 in the second set of gaps 24. The top fitting 2 further comprises two opposite faces 23 extending perpendicular from the top face of the sheet 22. The faces 23 constitutes a bracket e.g. for mounting equipment or construction elements and may comprise one or more through going holes. At the two edges not comprising the folds, two bendable holding flaps 25 are arranged. The bendable holding flaps 25 extend parallel to the sheet 22 prior to bending. When the top fitting 2 has been mounted on the base structure 1, the bendable holding flaps 25 may be bent to a position substantially perpendicular to the sheet 22. The bend holding flaps 25 keeps the top fitting 2 from being accidentally removed from the base structure 1. After having bent the holding flaps 25, the top fitting 2 may still be rotated and/or moved on top of the base structure.

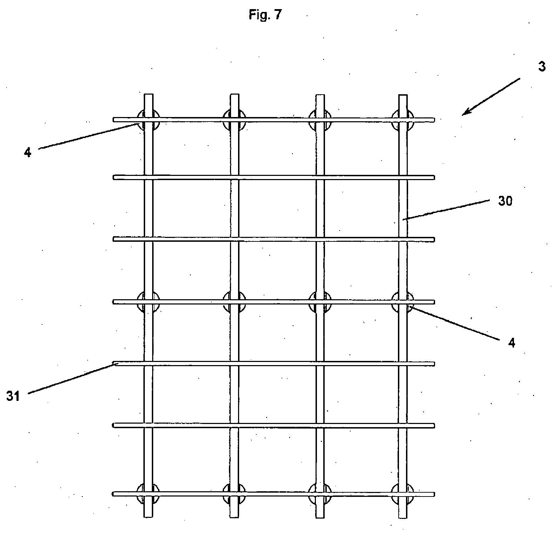

When joined, the base structure 1 and the top fitting 2 constitutes a non directional roof anchor 4. This roof anchor 4 may be used in building structures or foundations for mounting solar panels. According to fig. 7 such structure 3 may comprise a number roof anchors 4 mounted on e.g. a roof top. A first set of beams 30 such as but not limited to extruded profiles, bars, girders or rafters are mounted on to of the top fittings 2. On top of the first set of beams 30 a second set of beams 31 may be arranged. Solar panels may be mounted either directly on top of the first or second set of beams (30, 31).

In one embodiment (not shown) the top part 11 of the protrusion may have a substantially spherical or conical shape and/or inclining top surfaces 15. The guide 20 and, accordingly, the sheet 22 of the top fitting 2 may also have a substantially spherical or conical shape and/or inclining surfaces for engagement with the protrusion 10. The sheet 22 of the top fitting 2 may have an additional fold along a central portion parallel to the folds 21. By incorporating an additional fold the sheet 22 have a top surface inclining downwards from a central portion towards the edges of the sheet 22. Having inclining surfaces on the top part 11 and the top fitting 2 may be beneficial in regard to water flow-off or for other reasons.

## Claims

1. A roof anchor (4) configured to be mounted directly on a roof top and for fixing frame structures to a roof, said roof anchor (4) comprising of;
• a base structure (1) configured to be mounted directly on a roof top on a roofing surface, said base structure comprising a base (13) and a substantially circular protrusion (10) with a top part (11) having a substantially planar top surface (15), said protrusion (10) further having a reduced circumference at its lower end (12) defining a gap (14) encircling said protrusion,
• a top fitting (2) comprising a guide (20) which is constituted by a substantially planar sheet (22) and folds (21) defining a second set of gaps (24), said planar sheet (22) spans the length and width of said top fitting and defines a top face
wherein said guide (20) constitutes a bracket (23) for receiving equipment or construction elements, said bracket (23) comprising two opposite faces (23) extending perpendicularly from said top face of said sheet (22), said top fitting (2) further is configured for engagement with said top part (11) of said protrusion (10) and in that that said top fitting (2) is able to rotate in relation to said base structure (1) when said gaps (24) of said guide (20) of said top fitting (2) are in engagement with said top part (11) of said protrusion (10).

2. A roof anchor (4) for fixing frame structures to a roof according to claim 1, wherein said top part (11) of said protrusion (10) is able to move or slide in a longitudinal direction in said guide (20) of said top fitting (2) when said guide (20) is in engagement with said top part (11) of said protrusion (10).

3. A roof anchor (4) for fixing frame structures to a roof according to any of the previous claims, wherein said substantially circular protrusion (10) of said base structure (1) protrudes from a centre of said base (13).

4. A roof anchor (4) for fixing frame structures to a roof according to any of the previous claims, wherein said top surface (15) of said protrusion 10 is at least partially inclining.

5. A roof anchor (4) for fixing frame structures to a roof according to any of the previous claims, wherein a top face of said top fitting (2) is at least partially inclining.

6. A roof anchor (4) for fixing frame structures to a roof according to any of the previous claims, wherein said roof anchor is a solar energy installation device.

7. A system for fixing solar panels to a roof by said system constituting a frame structure on which solar panels can be mounted, said system comprising;
• four or more roof anchors (4) according to any of the claims 1-6,
• a first set of beams (30) adapted for being mounted on said top fittings (2) of said roof anchors (4),
• a second set of beams (31) adapted for being mounted on first set of beams (30),
wherein said base structures (1) of said roof anchors (4) are configured for being mounted without particular regard to their angular orientation and said top fittings (2) are able to rotate in relation to said base structures (1) when said guides (20) of said top fittings (2) are in engagement with said top parts (11) of said protrusions (10).

## Patentansprüche

1. Dachanker (4), welcher zur unmittelbaren Montage auf einem Aufdach und zur Fixierung von Rahmenstrukturen auf einem Dach ausgebildet ist, welcher Dachanker (4) folgendes umfasst;
• eine Basiskonstruktion (1) zur unmittelbaren Montage auf einem Aufdach auf einer Dachfläche, wobei die Basiskonstruktion eine Basis (13) und einen im Wesentlichen kreisförmigen Vorsprung (10) mit einem oberen Teil (11) mit einer im Wesentlichen ebenen oberen Oberfläche (15) umfasst, wobei der Vorsprung (10) ferner an seinem unteren Ende (12) einen reduzierten Umfang aufweist, welcher einen den Vorsprung umgebenden Spalt (14) definiert,
• ein oberer Verbindungsstück (2) umfassend eine Führung (20), welche durch eine im Wesentlichen ebene Platte (22) und Falte (21), die einen zweiten Satz von Spalten (24) definieren, gebildet ist, wobei die ebene Platte (22) die Länge und Breite des oberen Verbindungsstücks überspannt und eine obere Fläche definiert,
wobei die Führung (20) einen Halter (23) zur Aufnahme von Ausrüstung oder Bauelementen bildet, welcher Halter (23) zwei entgegengesetzte Flächen (23) umfasst, die sich senkrecht von der oberen Fläche der Platte (22) erstrecken, wobei das obere Verbindungsstück (2) ferner dazu ausgebildet ist, mit dem oberen Teil (11) des Vorsprungs (10) in Eingriff zu gelangen,
und dass das obere Verbindungsstück (2) dazu im Stande ist, relativ zur Basiskonstruktion (1) zu rotieren, wenn sich die Spalte (24) der Führung (20) des oberen Verbindungsstücks (2) mit dem oberen Teil (11) des Vorsprungs (10) im Eingriff befinden.

2. Dachanker (4) zur Fixierung von Rahmenstrukturen an einem Dach nach Anspruch 1, wobei der obere Teil (11) des Vorsprungs (10) dazu im Stande ist, sich in einer Längsrichtung in der Führung (20) des oberen Verbindungsstücks (2) zu bewegen oder zu gleiten, wenn sich die Führung (20) mit dem oberen Teil (11) des Vorsprungs (10) im Eingriff befindet.

3. Dachanker (4) zur Fixierung von Rahmenstrukturen an einem Dach nach einem der vorgehenden Ansprüche, wobei der im Wesentlichen kreisförmige Vorsprung (10) der Basiskonstruktion (1) von einer Mitte der Basis (13) vorspringt.

4. Dachanker (4) zur Fixierung von Rahmenstrukturen an einem Dach nach einem der vorgehenden Ansprüche, wobei die obere Oberfläche (15) des Vorsprungs (10) zumindest teilweise geneigt ist.

5. Dachanker (4) zur Fixierung von Rahmenstrukturen an einem Dach nach einem der vorgehenden Ansprüche, wobei eine obere Fläche des oberen Verbindungsstücks (2) zumindest teilweise geneigt ist.

6. Dachanker (4) zur Fixierung von Rahmenstrukturen an einem Dach nach einem der vorgehenden Ansprüche, wobei der Dachanker eine Sonnenenergieinstallationsvorrichtung ist.

7. System zur Fixierung von Solarpanelen auf einem Dach durch das System, welches eine Rahmenstruktur bildet, an welcher Solarpanele montiert werden können, welches System umfasst;
• vier oder mehrere Dachanker (4) nach einem der Ansprüche 1-6,
• einen ersten Satz von Trägern (30), die für das Montieren auf den oberen Verbindungsstücken (2) der Dachanker (4) ausgebildet sind,
• einen zweiten Satz von Trägern (31), die für das Montieren auf dem ersten Satz von Trägern (30) ausgebildet sind,
wobei die Basiskonstruktionen (1) der Dachanker (4) für das Montieren ohne Rücksicht auf ihre Winkelausrichtung ausgebildet sind, und die oberen Verbindungsstücke (2) dazu im Stande sind, relativ zu den Basiskonstruktionen (1) zu rotieren, wenn sich die Führungen (20) der oberen Verbindungsstücke (2) mit den oberen Teilen (11) der Vorsprünge (10) im Eingriff befinden.

## Revendications

1. Elément d'ancrage de toit (4) configuré de manière à être monté directement sur une partie supérieure de toit et à fixer des constructions de cadre à un toit, ledit élément d'ancrage (4) comprenant;
• une construction de base (1) configurée de manière à être montée directement sur une partie supérieure d'une surface de couverture, ladite construction de base comprenant une base (13) et une saillie essentiellement circulaire (10) avec une partie supérieure (11) ayant une surface supérieure essentiellement plane (15), ladite saillie (10) ayant en outre une circonférence réduite à son extrémité inférieure (12) définissant un espace (14) entourant ladite saillie,
• un raccord supérieur (2) comprenant un guide (20) qui est constitué par une feuille essentiellement plane (22) et des plis (21) définissant un deuxième ensemble d'espaces (24), ladite feuille plane (22) s'étendant sur la longueur et la largeur dudit raccord supérieur et définissant une face supérieure,
**dans lequel** ledit guide (20) constitue un support (23) pour recevoir de l'équipement ou des éléments de construction, ledit support (23) comprenant deux faces opposées (23) s'étendant perpendiculairement à partir de ladite face supérieure de ladite feuille (22), ledit raccord supérieur (2) étant en outre configuré de manière à s'engager avec ladite partie supérieure (11) de ladite saillie (10), et en ce que ledit raccord supérieur (2) est capable de tourner par rapport à ladite construction de base (1) lorsque lesdits espaces (24) dudit guide (20) dudit raccord supérieur (2) sont en prise avec ladite partie supérieure (11) de ladite saillie (10).

2. Elément d'ancrage de toit (4) pour fixer des constructions de cadre à un toit selon la revendication 1, dans lequel ladite partie supérieure (11) de ladite saillie (10) peut se déplacer ou glisser dans une direction longitudinale dans ledit guide (20) dudit raccord supérieur (2) quand ledit guide (20) est en prise avec ladite partie supérieure (11) de ladite saillie (10).

3. Elément d'ancrage de toit (4) pour fixer des constructions de cadre à un toit selon l'une quelconque des revendications précédentes, dans lequel ladite saillie essentiellement circulaire (10) de ladite construction de base (1) fait saillie à partir d'un centre de ladite base (13).

4. Elément d'ancrage de toit (4) pour fixer des constructions de cadre à un toit selon l'une quelconque des revendications précédentes, dans lequel ladite surface supérieure (15) de ladite saillie (10) est au moins partiellement inclinée.

5. Elément d'ancrage de toit (4) pour fixer des constructions de cadre à un toit selon l'une quelconque des revendications précédentes, dans lequel une face supérieure dudit raccord supérieur (2) est au moins partiellement inclinée.

6. Elément d'ancrage de toit (4) pour fixer des constructions de cadre à un toit selon l'une quelconque des revendications précédentes, dans lequel ledit élément d'ancrage de toit est un dispositif d'installation de l'énergie solaire.

7. Système de fixation des panneaux solaires à un toit par ledit système constituant une construction de cadre sur laquelle des panneaux solaires peuvent être montés, ledit système comprenant;
• quatre ou plusieurs éléments d'ancrage (4) selon l'une quelconque des revendications 1 à 6,
• un premier ensemble de poutres (30) adapté pour être monté sur lesdits raccords supérieurs (2) desdits éléments d'ancrage de toit (4),
• un deuxième ensemble de poutres (31) adapté pour être monté sur le premier ensemble de poutres (30),
**dans lequel** lesdites constructions de base (1) desdits éléments d'ancrage de toit (4) sont configurées de manière à être montées sans attention particulière à leur orientation angulaire et lesdits raccords supérieurs (2) sont en mesure de tourner par rapport à ladite construction de base (1) lorsque lesdits guides (20) desdits raccords supérieurs (2) sont en prise avec lesdites parties supérieures {11) desdites saillies (10).
